# FASCICULE DE BREVET EUROPEEN

(11) **EP 0 961 758 B1**
(45) Date de publication et mention de la délivrance du brevet: **12.12.2001**
(21) Numéro de dépôt: 98904210.6
(22) Date de dépôt: 23.01.1998
(51) Int. Cl.: C02F 1/52

(54) **PROCEDE DE TRAITEMENT PHYSICO-CHIMIQUE D'EFFLUENTS, NOTAMMENT D'EAUX DE SURFACE DESTINEES A LA CONSOMMATION**
VERFAHREN ZUR PHYSIKALISH-CHEMISCHEN BEHANDLUNG VON ABWASSER, INSBESONDERE VON, FÜR DEN VERBRAUCH,BESTIMMTEN OBERFLÄCHENWASSER
METHOD FOR THE PHYSICO-CHEMICAL TREATMENT OF EFFLUENTS, IN PARTICULAR OF SURFACE WATER FOR CONSUMPTION

(30) Priorité: 27.01.1997 FR 9700846
(43) Date de publication de la demande: 08.12.1999
(73) Titulaire: DEGREMONT, 92508 Rueil-Malmaison Cédex (FR)
(72) Inventeur: VION, Patrick, F-78800 Houilles (FR)
(74) Mandataire: Armengaud Ainé, Alain
(86) Numéro de dépôt international: FR9800125
(87) Numéro de publication internationale: WO9832701

(56) Documents cités:
- EP-A- 0 003 327
- EP-A- 0 680 933
- FR-A- 2 348 156
- US-A- 4 388 195

## Description

La présente invention concerne un procédé de traitement physico-chimique d'effluents notamment d'eaux de surface destinées à la consommation.

On sait que la mise en oeuvre de procédés physico-chimiques est commune à la plupart des traitements appliqués aux différents types d'eaux et que ces traitements consistent essentiellement en :
- une clarification des eaux de surface pour la consommation ou pour les industries,
- une clarification des eaux usées urbaines, pluviales ou industrielles,
- une décarbonatation
- une élimination des phosphates, etc.

Ces types de traitements physico-chimiques comprennent toujours les étapes successives suivantes :
- une coagulation : étape de neutralisation des colloïdes avec un sel métallique, composé trivalent du fer ou de l'aluminium en général, pour former un microfloc.

Cette étape de coagulation peut être réalisée en une ou plusieurs étapes ;
- une floculation .: étape d'agglomération et de croissance du microfloc. Cette étape d'agglomération s'effectue grâce à l'addition d'un polyélectrolyte (ou polymère), en aval de l'étape de coagulation ;
- une décantation : étape de séparation du floc et de l'eau interstitielle, entraînant la production de boues d'une part, et d'eau clarifiée, d'autre part .

Depuis une trentaine d'années, l'état de la technique relatif à un tel traitement physico-chimique a considérablement évolué par suite de l'apparition de deux technologies :
- la floculation avec masse de contact qui a permis d'améliorer la qualité des flocs, de réduire le volume des réacteurs et d'améliorer la clarification.En effet, les microflocs de la coagulation ont d'autant plus de chance de s'agglomérer et de croître que le milieu de réaction comporte une grande densité de particules : la vitesse de formation du floc est proportionnelle au nombre de particules libres dans la suspension.
- la décantation lamellaire, réalisée par introduction de plaques ou de tubes inclinés, dans les décanteurs. Cette technologie a permis de réduire la taille desdits décanteurs dans une proportion de 50 à 70%.

L'évolution technologique actuelle vise à l'amélioration des conditions de floculation, qui sont déterminantes quant à la qualité de l'eau traitée et à l'obtention de vitesses de décantation élevées .

A ce jour, les décanteurs modernes utilisent deux types de masses de contact dans le réacteur de floculation :
1. la boue décantée et recirculée : un exemple de cette technique est décrit dans FR-A-2 553 082 ;
2. des lests fins, tels que du microsable : un exemple de mise en oeuvre de cette technique est décrit dans FR-P-1 411 792 et dans FR-A- 2 627 704.

On exposera maintenant les avantages ainsi que les inconvénients des deux techniques connues, rappelées ci-dessus, de floculation à masse de contact.

### Floculation utilisant la boue comme masse de contact.

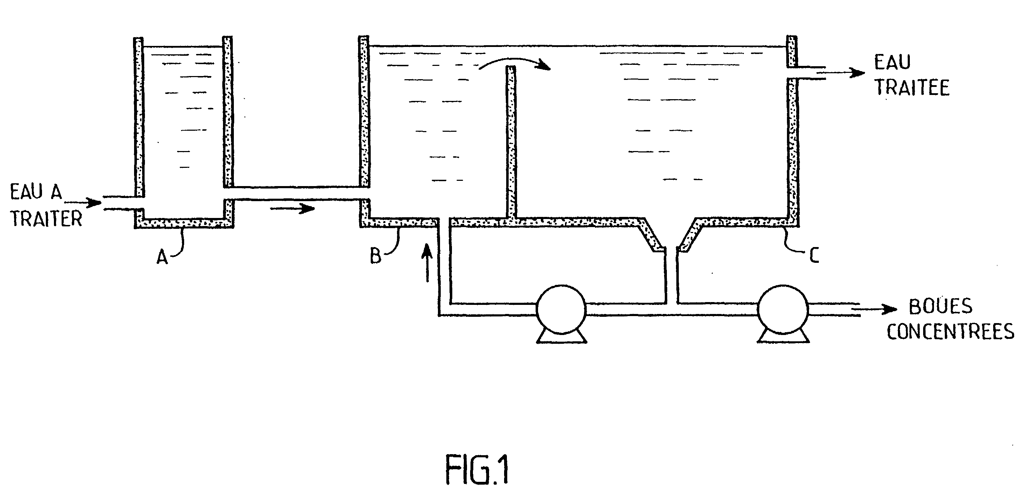

Sur la figure 1 du dessin annexé, on a représenté de façon schématique une installation de traitement physico-chimique mettant en oeuvre cette technique. Sur cette figure, on a schématisé en A le réacteur de coagulation, en B, le floculateur et en C le décanteur. Il s'agit là d'installations bien connues de l'homme de l'art et dans ces conditions, elles ne seront pas décrites. Ainsi US-A-4 388 195 décrit un procédé comprenant les étapes successives de coagulation, floculation et décantation, dans lequel la masse de contact est constituée par une partie des boues densifiées recirculées.

Ainsi qu'on le voit sur cette figure 1, la masse de contact, dans le réacteur de floculation B est constituée par la recirculation d'une partie des boues décantées en C. Le débit de boues recirculé représente entre 0,5 et 4% du débit traité. Les boues concentrées en excès sont extraites et évacuées. Leur volume représente, suivant les traitements, entre 0,1 et 1% du débit traité.

Les avantages de cette technique de floculation utilisant la boue décantée et recirculée, en tant que masse de contact sont les suivants :
- la masse de contact est générée par le procédé, donc disponible sans limitation de quantité, selon les besoins du procédé,
- la masse de contact offre une surface spécifique ou une occupation spatiale très importante, du fait de sa structure expansée, de sa faible densité relative ; à titre d'exemple 1 gramme de boues floculées dans un litre (concentration moyenne dans le réacteur) occupe, après décantation d'environ 5 minutes, un volume égal à 100 ml ;
- cette très grande surface spécifique ou occupation spatiale augmente considérablement la probabilité de contact entre les flocs et les très fines particules, colloides coagulés, micro-organismes et donc de « piéger » ces matières en suspension avec beaucoup d'efficacité.

Les inconvénients et limites de cette technique concernent les vitesses de décantation obtenues avec des boues densifiées qui sont comprises entre 30% et 80% des vitesses obtenues avec du lest.

### 2 . Floculation utilisant un lest comme masse de contact :

Selon cette technique, la masse de contact est obtenue par l'addition, en amont d'un fiocutateur, d'un lest neuf ou recyclé après nettoyage. Les moyens permettant de séparer et de régénérer le lest devant être recyclé dans le floculateur sont des moyens bien connus de l'homme de l'art et dans ces conditions, ils ne seront pas décrits. Ainsi EP-A-0 680 933 décrit un procédé comportant les étapes successives de coagulation, floculation et décantation, dans lequel la masse de contact est un lest constitué de particules granulaires introduites pendant l'étape de floculation.

Dans la mise en oeuvre de cette technique, le lest est généralement constitué de sable et les extractions en continu portent sur environ 5% du débit d'eau traîté par le décanteur ; ces extractions, chargées de boues enrobant le micro sable, doivent être traitées afin de régénérer ledit sable ; le sable nettoyé est ultérieurement réinjecté en amont du floculateur, en tête de l'installation . Le résidu engendré par ce nettoyage du sable-lest représente les boues en excès.

On notera que les appareils à lest existants et décrits dans la littérature et notamment dans FR-P-1 411 792 et dans FR-A-2 627 704, comportent un recyclage du lest pour des raisons évidentes de coût d'exploitation. Par ailleurs, dans tous les documents décrivant cette technologie, il est précisé que le lest est toujours "nettoyé", c'est-à-dire régénéré. En effet, le lest, "encollé" par le polymère, doit présenter le maximum de surface d'adhésion pour les flocs de précipitation réalisés chimiquement lors de la coagulation. Un nettoyage physique efficace est donc indispensable pour dégager le maximum de surface d'accrochage.

Le lest est souvent un sable, de diamètre généralement compris entre 50 µm et 150 µm, dénommé généralement micro-sable.

La publication Journal Water SRT - AQUA, vo. 41, N° 1, pp. 18-27, 1992, fait état d'une courbe reliant la turbidité de l'eau produite au diamètre des particules de lest qui démontre que ce procédé devient efficace dans la mesure où les particules de sable ne dépassent pas 150 µm, les résultats étant d'autant meilleurs que l'on rejoint des valeurs de l'ordre de 50 à 100 µm.

On remarquera que l'avantage de cette technique de floculation à masse de contact constituées d'un lest fin réside essentiellement dans la vitesse de décantation, qui peut être supérieure de 20% à 200%, par rapport aux vitesses obtenues par les procédés de-floculation à masse de contact constituée de boue décantée et recirculée. Ainsi en clarification d'eau de rivière, les vitesses annoncées au travers des modules lamellaires, sont comprises entre 25 et 50 m3/m2.h alors que les équipements mettant en oeuvre le procédé de floculation en utilisant la boue comme masse de contact sont limités à des vitesses comprises entre environ 15 et 30 m3/m2.h.

Les inconvénients essentiels de cette technique tiennent essentiellement au fait que le lest doit assurer deux fonctions différentes :
- une floculation accélérée, grâce à la mise en oeuvre d'une masse de contact à forte surface spécifique (ou occupation spatiale) ;
- l'accélération des vitesses de décantation , résultant de l'addition de lest au floc.

Ces limites ou inconvénients sont imputables aux caractéristiques suivantes
- à masse de contact équivalente (en poids), le lest offre une surface de contact ou pourcentage d'occupation spatiale beaucoup plus faible que la boue. A titre d'exemple :
- dans le cas d'une « floculation avec boues », la concentration dans le réacteur est d'environ 1 g/l et le volume occupé par la boue après cinq minutes de décantation est d'environ 10% du volume initial ;
- dans le cas d'une « floculation avec lest (par exemple du sable) », la concentration en lest dans le réacteur doit atteindre au moins 5 g/l, alors que le volume occupé par la boue après cinq minutes de décantation n'est que d'environ 1% du volume initial ;
- l'augmentation de la quantité de lest souhaitable pour l'obtention d'une forte masse de contact (et non pour l'obtention d'une forte vitesse de décantation), conduit à augmenter le débit de recirculation vers le système de traitement des boues extraites, traitement qui consiste à séparer le sable des boues, afin de le regénérer. Cette opération est généralement réalisée par des hydrocyclones, alimentés à des pressions élevées, opération qui devient donc fort coûteuse au plan consommation d' énergie. En réalité, et afin de limiter les coûts d'exploitation, le débit de recirculation est volontairement limité entre 5 et 10% du débit traité et la concentration en lest dans le réacteur ne dépasse pas 5 à 10 g/l: ce choix est de toute évidence, incompatible avec la possibilité d'optimiser la floculation .
- diverses techniques visant à compenser le déficit de masse de contact résultant des conditions opératoires précédemment décrites telles que :

- la mise en oeuvre d'un surcroît d'énergie de floculation (on cite des chiffres allant jusqu'à 100 fois l'énergie classique de floculation) ou
- l'utilisation de particules de lest encore plus fines, augmentant la surface spécifique (par exemple, particules de diamètre compris entre 10 et 50 µm), ne sont pas envisageables pour des raisons de coût énergétique d'une part et de difficultés de décantation et de séparation sable-floc d'autre part.

En résumé : les performances de la floculation avec lest sont limitées par trois facteurs :
- le système est sensible aux à-coups de pollution par manque de disponibilité de site d'accrochage sur le lest (limitation de la masse de contact à 5, 10 g/l maximum).
- système est moins performant vis à vis des pollutions dites « sensibles » (oeufs d'helminthes, micro-organismes, micro-particules, traces de composés organiques complexes, pesticides,...)
- la faible concentration des boues extraites, résultant de la nécessité de nettoyer le lest aussi complètement que possible : cette concentration est au moins 10 fois plus faible que celle mesurée sur des appareils à masse de contact boues, et impliquent fréquemment l'installation d'un équipement complémentaire, en aval du décanteur, pour l'épaississement des boues extraites.
   Compte-tenu des inconvénients et des limites des procédés classiques rappelés ci-dessus, l'invention se propose d'apporter un nouveau procédé permettant de combiner les avantages du rendement de la floculation mettant en oeuvre une masse de contact constituée de boues densifiées, recirculées, avec la rapidité de la décantation d'un procédé de floculation avec lest.

En conséquence, cette invention concerne un procédé de traitement physico-chimique d'effluents, notamment d'eaux de surfaces destinées à la consommation comprenant les étapes successives de coagulation, floculation et décantation, caractérisé en ce que pendant l'étape de floculation, on introduit dans la boue un lest constituant un alourdisseur pour cette boue et qui vient s'incorporer dans la masse de contact utilisée durant cette étape de floculation, cette masse de contact étant constituée par une partie des boues densifiées provenant de l'étape de décantation et recyclée en continu dans l'étape de floculation, sans aucun traitement, l'autre partie desdites boues densifiées en excès, non recyclée dans l'étape de floculation et extraite de l'étape de décantation, représentant un débit de purge de l'ordre de 0,1% à 1% du débit d'eau traitée, étant traité pour récupérer le lest, sans être nettoyé, ledit lest, ainsi séparé des boues, étant réintroduit dans la masse de contact durant l'étape de floculation.

Ainsi, le procédé selon l'invention met en oeuvre un lest, utilisé de façon différente de celle du procédé dit « floculation avec lest » décrit ci-dessus, Selon l'invention, le lest ne joue qu'un seul rôle, celui d'alourdisseur et la fonction floculation de la masse de contact est réalisée par les seules boues recirculées. Le lest ne constitue plus une surface d'adhérence offerte aux particules mais il constitue simplement un alourdisseur qui vient s'incorporer dans la boue recirculée vers le réacteur de floculation, cette boue recirculée constituant la masse de contact.

Selon une caractéristique de la présente invention, le lest est constitué d'un matériau présentant une granulométrie comprise entre 50 et 500 µm, de préférence entre 100 et 300 µm.

Selon un mode de mise en oeuvre préféré de l'invention, ce lest est un matériau minéral dense (masse spécifique réelle de particule comprise entre 2 et 8 g/ml), notamment du sable, du grenat ou de la magnétite.

Selon l'invention, la récupération du lest s'effectue de préférence par décantation gravitaire, soit à l'intérieur, soit à l'extérieur du décanteur, le lest récupéré étant ensuite recyclé dans l'étape de floculation.

D'autres caractéristiques et avantages de la présente invention ressortiront de la description faite ci-après en référence au dessin annexé qui en illustre un exemple de mise en oeuvre dépourvu de tout caractère limitatif.

Sur les dessins :
- La figure 1 est un schéma de principe relatif au procédé connu décrit ci-dessus de traitement physico-chimique dont la masse de contact est constituée par de la boue décantée et recirculée ;
- La figure 2 est un schéma de principe, similaire à la figure 1 illustrant le procédé objet de la présente invention.

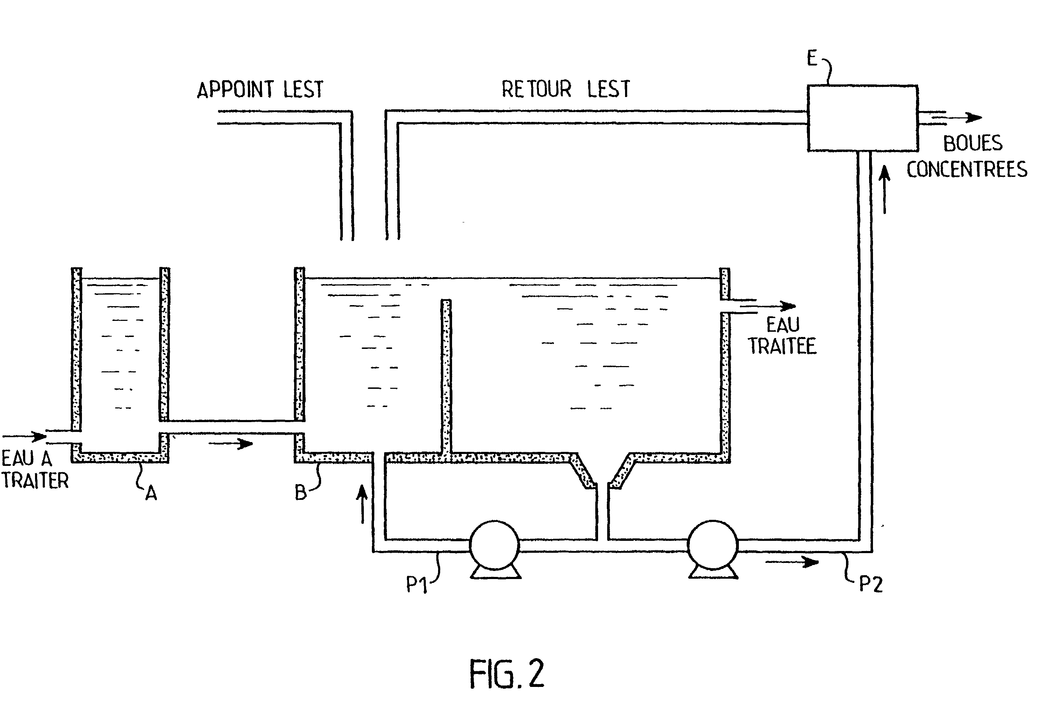

Ainsi qu'on le voit sur cette figure 2, la masse de contact dans le floculateur B est constituée par la recirculation en continu d'une partie P1 des boues densifiées, après décantation et épaississement dans le décanteur C, mais sans aucune opération de séparation ou de régénération. Selon un mode de mise en oeuvre préféré de ce procédé, le débit recirculé représente entre 0.5% et 4% du débit traité.

Une fraction P2 des boues densifiées , en excès, doit évidemment être évacuée, par exemple avec un débit de purge compris entre 0.1% (clarification) et 1% (eaux résiduaires très chargées) du débit d'eau traité. A ce stade, deux remarques s'imposent:
- suivant le taux de purge et le coût du lest, les boues en excès peuvent être soit purement et simplement rejetées , soit traitées pour récupérer le lest,
- le traitement des boues, pour récupération du sable, est différent de celui de la floculation par lest (FR-P-1 411 792 et FR-A- 2 627 704). En effet, selon l'invention, le sable est récupéré sans être nettoyé, c'est-à-dire sans régénération et le traitement s'effectue sur des boues concentrées, puisqu'il n'est pas nécessaire de procéder à un nettoyage approfondi du sable dans la phase de séparation.

Sur la figure 2, on a schématisé en E, les moyens prévus selon l'invention pour assurer la récupération du lest. On notera que le faible débit de boues à extraire, 0.1% à 1% du débit d'eau traité (soit 5 à 50 fois plus faible que dans le cas de floculation avec lest) permet d'utiliser éventuellement des techniques de séparation plus sophistiquées et plus performantes, parmi lesquelles on peut citer notamment :
. la séparation par hydrocyclone,
. la séparation par soufflage d'air,
. la séparation par élutriation,
. la séparation centrifuge,
. la séparation par ultra-son,
ou de réduire le coût énergétique de ce poste de séparation.

Etant donné que le lest a uniquement un rôle de simple alourdissement et non une fonction de masse de contact, le choix de la granulométrie des particules de ce lest alourdisseur, contrairement au cas de la floculation par lest, peut avantageusement être orienté vers des diamètres plus grands . Ainsi, on peut utiliser des particules d'alourdisseur présentant un diamètre compris entre 50 et 500 µm et de préférence, entre 150 et 300 µm alors que dans le cas d'une floculation avec masse de contact constitué d'un lest, la granulométrie de ce dernier doit être inférieure à 150 µm et de préférence comprise entre 50 et 100 µm.

Ce diamètre du lest, dans le procédé objet de l'invention constitue une caractéristique fondamentale pour :
- l'augmentation des vitesses de décantation
   si d = 100 µm, vitesse de décantation du lest = 30 m/h
   si d = 250 µm, vitesse de décantation du lest = 115 m/h
- la récupération du lest dans les boues extraites .

On notera que, dans certains cas, si le diamètre du lest est suffisant, une simple séparation gravitaire, à l'intérieur ou à l'extérieur du décanteur, peut être envisagée pour permettre de récupérer et de recycler le lest.

Le procédé selon l'invention, avec floculation avec masse de contact constituée de boues densifiées recirculées présente notamment les avantages suivants :
1. Il offre un très fort pourcentage d'occupation spatiale du matériau d'accrochage, d'où une grande efficacité du traitement :
   - stabilité des performances d'épuration, même lors d'une augmentation importante de la charge de l'eau brute ;
   - aptitude à l'élimination poussée de pollutions dites « sensibles » (micro -particules, micro-organismes, traces de composés organiques complexes, pesticides, oeufs d'helminthes, etc....).
2. Le lest ne joue que le rôle d'alourdisseur. Sa granulométrie moyenne peut donc être supérieure à celle requise pour la floculation par lest (par ex. 250 µm contre 100 µm ). Cette possibilité offre deux avantages :
   - les vitesses de décantation sont considérablement accrues et ce, d'autant plus que le diamètre de l'alourdisseur est plus important ;
   - la récupération du lest est d'autant plus aisée que son diamètre est plus important.

Dans certains cas, si son diamètre est suffisant il est possible d'envisager une simple séparation gravitaire à l'intérieur ou à l'extérieur du décanteur.
3. Le lest récupéré n'a pas besoin d'être nettoyé, puisqu'on ne cherche pas à régénérer des sites « propres » pour la coagulation / floculation. Il est dès lors possible, et avantageux, d'effectuer la récupération du lest à partir de boues très concentrées, possibilité qui offre les avantages suivants :
   - les boues extraites étant à peu près 10 fois plus concentrées, le volume du stockeur-épaississeur installé en aval du décanteur peut être réduit en proportion.
   - le système de récupération du sable travaille sur des volumes réduits dans les mêmes proportions (par ex. 10 fois) et, là encore, on peut procèder à une réduction de la taille des équipements et de la consommation d'énergie.
4. La dissociation des fonctions lest - masse de boue pour floculation, permet d'envisager de fonctionner à petit débit ( entre moins de 20% et 80% de Qmax. suivant les cas) sans addition ou recirculation du lest, ce qui permet de réduire encore les coûts d'exploitation.

Le tableau ci-après résume les performances comparatives du procédé objet de la présente invention et des procédés selon la technique antérieure, rappelés ci-dessus. Ce tableau se réfère à des mises en oeuvre de ces procédés sur une eau de rivière, les taux de traitement étant identiques pour toutes ces mises en oeuvre.

**TABLEAU**

| ***Type d'appareil*** | ***Floculation avec boues*** | ***Floculation avec lest*** | ***Floculation avec boues densfiées*** |
|---|---|---|---|
| Vitesse dans les modules de décantation lamellaires (m/h) | 25 | 40 | 60 |
| Temps de coagulation et de floculation (mn) | 10 | 10 | 10 |
| Lest | Non | Oui | Oui |
| - diamètre | | 50 - 100 µm | 200 µm |
| - concentration | | 5 g/l | 3 g/l |
| Taux de recirculation (%) | 2 | 7 | 2 |
| MES influent ( en mg/l) | 5 à 70 | 5 à 70 | 5 à 70 |
| Eau traitée | | | |
| - turbidité (NTU) | 0.5 à 1 | 1 à 5 | 1 à 2 |
| - MES (mg/l) | <2 | 2 à 10 | 2 à 5 |
| Boues concentration g/l | ≅ 30 g/l | ≤ 3 g/l | ≅ 30 g/l |

Il demeure bien entendu que la présente invention n'est pas limitée aux exemples de mises en oeuvre décrits et/ou représentés mais qu'elle en englobe toutes les variantes qui entrent dans le cadre de la portée des revendications annexées

## Revendications

1. Procédé de traitement physico-chimique d'effluents, notamment d'eaux de surfaces destinées à la consommation comprenant les étapes successives de coagulation, floculation et décantation, **caractérisé en ce que** pendant l'étape de floculation, on introduit dans la boue un lest constituant un alourdisseur pour cette boue et qui vient s'incorporer dans la masse de contact utilisée durant cette étape de floculation, cette masse de contact étant constituée par une partie des boues densifiées provenant de l'étape de décantation et recyclée (P1) en continu dans l'étape de floculation, sans aucun traitement, l'autre partie (P2) desdites boues densifiées en excès, non recyclée dans l'étape de floculation et extraite de l'étape de décantation, représentant un débit de purge de l'ordre de 0,1% à 1% du débit d'eau traitée, étant traité pour récupérer le lest, sans être nettoyé, ledit lest, ainsi séparé des boues, étant réintroduit dans la masse de contact durant l'étape de floculation.

2. Procédé selon la revendication 1 **caractérisé en ce que** ledit lest est constitué d'un matériau présentant une granulométrie comprise entre 50 et 500 µm, de préférence, entre 100 et 300 µm.

3. Procédé selon la revendication 2 **caractérisé en ce que** ledit lest est un matériau minéral, dense présentant une masse spécifique réelle de particule comprise entre 2 et 8 g/ml, notamment du sable, du grenat ou de la magnétite.

4. Procédé selon l'une quelconque des revendications précédentes **caractérisé en ce que** le débit des boues densifiées constituant la masse de contact, recirculées en continu, après décantation et épaississement, vers l'étape de floculation est compris entre 0,5 et 4% du débit d'effluents traité.

5. Procédé selon la revendication 1 **caractérisé en ce que** la récupération du lest s' effectue par une décantation gravitaire, soit à l'intérieur, soit à l'extérieur du décanteur C, le lest récupéré étant ensuite recyclé dans l'étape de floculation.

## Claims

1. Method for the physico-chemical treatment of effluent, notably surface water intended for consumption, comprising the successive steps of coagulation, flocculation and settlement, **characterised in that**, during the flocculation step, a ballast is introduced into the sludge constituting a loader for the sludge and which is incorporated in the contact mass used during this flocculation step, this contact mass consisting partly of densified sludges coming from the settlement step and recycled (P1) continuously in the flocculation step, without any treatment, the other part (P2) of the said densified sludge in excess, not recycled in the flocculation step and extracted from the settling step, representing a drainage rate of around 0.1% to 1% of the throughput of treated water, being treated in order to recover the ballast, without being cleaned, the said ballast, thus separated from the sludge, being reintroduced into the contact mass during the flocculation step.

2. Method according to Claim 1, **characterised in that** the said ballast consists of a material having a granulometry of between 50 and 500 µm, and preferably between 100 and 300 µm.

3. Method according to Claim 2, **characterised in that** the said ballast is a dense mineral material having a particle real density of between 2 and 8 g/ml, notably sand, garnet or magnetite.

4. Method according to any one of the preceding claims, **characterised in that** the flow of densified sludges constituting the contact mass, continuously recirculated, after settlement and thickening, to the flocculation step is between 0.5 and 4% of the flow of treated effluent.

5. Method according to Claim 1, **characterised in that** the recovery of the ballast takes place by gravity settling, either inside or outside the settler C, the recovered ballast then being recycled in the flocculation step.

## Patentansprüche

1. Verfahren zur physikalisch-chemischen Behandlung von Abwasser, insbesondere von zur Konsumtion bestimmtem Oberflächenwasser, welches die aufeinander folgenden Stufen Koagulieren, Ausflocken und Absetzen umfasst, **dadurch gekennzeichnet, dass** dem Schlamm in der Ausflockungsstufe ein Ballaststoff zugesetzt wird, der ein Beschwerungsmittel für jenen darstellt und sich in die in dieser Ausflockungsstufe verwendete Kontaktmasse einbaut, die aus dem Teil (P1) des aus der Absetzstufe stammenden eingedickten Schlamms besteht, der kontinuierlich, ohne weitere Behandlung in die Ausflockungsstufe zurückgeführt wird, und der andere, überschüssige Teil (P2) des eingedickten Schlamms, der aus der Absetzstufe abgeleitet und nicht in die Ausflockungsstufe zurückgeführt wird und eine Abflussmenge von etwa 0,1 bis 1 % des behandelten Abwasserdurchsatzes ausmacht, behandelt wird, um den Ballaststoff zurückzugewinnen, ohne den so vom Schlamm befreiten Ballaststoff zu reinigen, der in die Kontaktmasse in der Ausflockungsstufe zurückgeführt wird.

2. Verfahren nach Anspruch 1, **dadurch gekennzeichnet, dass** der Ballaststoff aus einem Material besteht, dessen Korngröße 50 bis 500 *µ*m und vorzugsweise zwischen 100 und 300 *µ*m beträgt.

3. Verfahren nach Anspruch 2, **dadurch gekennzeichnet, dass** der Ballaststoff ein dichtes mineralisches Material mit einer reinen Teilchendichte von 2 bis 8 g/ml und insbesondere Sand, Granat oder Magnetit ist.

4. Verfahren nach einem der vorhergehenden Ansprüche, **dadurch gekennzeichnet, dass** der Durchfluss des die Kontaktmasse bildenden eingedickten Schlamms, der nach dem Absetzen und Eindicken kontinuierlich in die Ausflockungsstufe zurückgeführt wird, 0,5 bis 4 % des behandelten Abwasserdurchsatzes beträgt.

5. Verfahren nach Anspruch 1, **dadurch gekennzeichnet, dass** die Rückgewinnung des Ballaststoffs entweder im Absetzbecken C oder außerhalb davon durch einen Absetzvorgang mittels Schwerkraft erfolgt, wobei der zurückgewonnene Ballaststoff anschließend in die Ausflockungsstufe zurückgeführt wird.
